# EUROPÄISCHE PATENTANMELDUNG

(11) **EP 2 905 135 A2**
(43) Veröffentlichungstag der Anmeldung: **12.08.2015**
(21) Anmeldenummer: 14186527.9
(22) Anmeldetag: 26.09.2014
(51) Int. Cl.: B32B 37/10, B32B 38/06, B32B 37/30, B32B 38/00, E04F 13/08

(54) **Verfahren zur Herstellung eines Paneels**

(30) Priorität: 05.02.2014 EP 14154039; 16.07.2014 EP 14177329
(71) Anmelder: Dammers, Dirk, 47441 Moers (DE)
(72) Erfinder: Dammers, Dirk, 47441 Moers (DE)
(74) Vertreter: DR. STARK & PARTNER

(57) **Zusammenfassung**

Die Erfindung betrifft ein Verfahren zur Herstellung eines Paneels (8) mit einer Trägerplatte (1) und mit einer auf der ersten Oberfläche (2) aufgebrachten Schicht (6), wobei die Kantenbereiche (7) des herzustellenden Paneels (8) an den zwei gegenüberliegenden Längsseitenflächen (4) und/oder an den zwei gegenüberliegenden Querseitenflächen (5) abgerundet oder abgeschrägt ausgebildet sind und die Schicht (6) auch auf den Kantenbereiche (7) aufgebracht wird.

Das Verfahren ist gekennzeichnet durch

- entweder die Trägerplatte (1) mit der Schicht (6) beschichtet und mit Nuten (10) versehen werden,
- oder die Trägerplatte (1) mit Nuten (10) versehen und anschließend mit der Schicht (6) beschichtet werden,
- oder die Herstellung der Trägerplatte (1) und auch das Versehen der herzustellenden Trägerplatte (1) mit Nuten (10) während der Beschichtung mit der Schicht (6) erfolgt,

wobei die Nuten (10) Seitenflanken (12) und einen Nutgrund (11) umfassen, und
- die Trägerplatte (1) nach dem Beschichten in mehrere Paneele (8) getrennt werden , wobei die Trennung im Nutgrund (11) erfolgt.

## Beschreibung

Die Erfindung betrifft ein Verfahren zur Herstellung eines Paneels, insbesondere Fußboden-, Decken- oder Wandpaneels, mit einer Trägerplatte einerseits, die eine erste Oberfläche und eine zweite Oberfläche sowie zwei gegenüberliegende Längsseitenflächen und zwei gegenüberliegende Querseitenflächen aufweist, und mit einer auf der ersten Oberfläche aufgebrachten Schicht andererseits, wobei die Kantenbereiche des herzustellenden Paneels an den zwei gegenüberliegenden Längsseitenflächen und/oder an den zwei gegenüberliegenden Querseitenflächen abgerundet oder abgeschrägt ausgebildet sind und die aufzubringende Schicht auch auf den abgerundeten und die abgeschrägten Kantenbereiche aufgebracht wird.

Unter einem Paneel werden beispielsweise Tafeln aus einem Holzwerkstoff oder furnierte Platten für Wand- und Deckenverkleidungen oder aber auch für Böden verstanden. Unter Holzwerkstoffen werden solche Werkstoffe verstanden, die durch Zerkleinern von Holz, beispielsweise zu Holzfasern oder Holzspänen, und anschließendes Zusammenfügen erzeugt werden. Die Größe und die Form dieser Holzwerkstoffe beeinflusst die Art des hergestellten Paneels und ihre Eigenschaften. Die Holzwerkstoffe, wie beispielsweise Holzfasern oder Holzspäne, können ohne oder mit Bindemitteln, wie Leim, Phenolharze, Melamin, Zement oder dergleichen, miteinander verbunden werden.

Trägerplatten für Paneele können beispielsweise als Spanplatte, als MDF-Platte (UL-LDF) mit einer Rohdichte <500 kg/m³, als Leicht-MDF-Platte (LDF) mit einer Rohdichte <650 kg/m³, als Normal-MDF-Platte mit einer Rohdichte <850 kg/m³ als hochverdichtete MDF-Platte (HDF) mit einer Rohdichte >850 kg/m³ ausgebildet sein.

Es ist aber auch durchaus möglich, dass es sich bei einer Trägerplatte beispielsweise um eine Kunststoffplatte oder um eine Holzplatte, beispielsweise um eine Vollholzplatte, Massivholzplatte oder Leimholzplatte handelt. Auch können Trägerplatten aus mineralischen Werkstoffen, wie Gips, oder aus anderen Stoffen geringer Festigkeit hergestellt sein.

Bisher wird bei der Herstellung eines Paneels mit abgerundeten oder abgeschrägten Kantenbereichen zunächst eine große unbeschichtete Trägerplatte in mehrere Streifen, wobei jeder Streifen die Trägerplatte für ein herzustellenden Paneel darstellt, getrennt. Anschließend werden beispielsweise mittels Fräsen die abzurundenden bzw. abzuschrägenden Kantenbereiche der gegenüberliegenden Längsseitenfläche und/oder der gegenüberliegenden Querseitenfläche in dem gewünschten Sinne abgerundet bzw. abgeschrägt. Anschließend wird in einem nächsten Schritt eine Schicht auf die Oberseite aufgepresst, wobei diese Schicht die abgeschrägten bzw. abgerundeten Kantenbereiche mitumfasst. Eine solche Herstellung erfordert mehrere Arbeitsschritte und ist insoweit recht aufwendig.

Aufgabe der Erfindung ist es, die vorgenannten Nachteile zu vermeiden und ein Verfahren anzugeben, dass ein einfacheres Beschichten von Paneelen mit abgeschrägten oder abgerundeten Kantenbereichen ermöglicht.

Diese Aufgabe wird dadurch gelöst, dass in einem ersten Verfahrensschritt
- entweder in einem Arbeitsschritt die Trägerplatte mit der Schicht beschichtet und gleichzeitig mit Nuten versehen wird, wobei die Nuten Seitenflanken und einen Nutgrund umfassen,
- oder die Trägerplatte zunächst mit Nuten versehen und anschließend mit der Schicht beschichtet wird, wobei die Nuten Seitenflanken und einen Nutgrund umfassen,
- oder aber die Herstellung der Trägerplatte und auch das Versehen der herzustellenden Trägerplatte mit Nuten zusammen mit der Beschichtung mit der Schicht erfolgt, wobei die Nuten Seitenflanken und einen Nutgrund umfassen,
und dass in einem zweiten Verfahrensschritt
die Trägerplatte nach dem Beschichten in mehrere Paneele getrennt wird und die Einbringung der Nuten sowie die Trennung in Paneele derart aufeinander abgestimmt erfolgen, dass nach dem jeweiligen Durchtrennen entlang jeweils einer Nut die Seitenflanken der Nuten jeweils den abgerundeten oder abgeschrägten Kantenbereich des entsprechenden Paneels bilden.

Bei dem erfindungsgemäßen Verfahren werden entweder zunächst Nuten in eine Trägerplatte eingebracht und anschließend wird in die mit den Nuten bereits versehene Trägerplatte die Schicht aufgebracht. Alternativ wird direkt mit dem Einbringen der Nuten in einem Schritt die Schicht aufgebracht.

Sofern bei den herzustellenden Paneelen beispielsweise nur die Kantenbereiche der Längsseitenfläche abgeschrägt oder abgerundet sein sollen, werden in die Trägerplatte entsprechend parallel angeordnete Nuten eingebracht. Das gleiche gilt für den Fall, wenn bei den herzustellenden Paneelen nur die Kantenbereiche der gegenüberliegenden Querseitenfläche abgerundet oder abgeschrägt ausgebildet sein sollen.

Sollen jedoch die Kantenbereiche der gegenüberliegenden Längsseitenflächen und auch die Kantenbereiche der gegenüberliegenden Querseitenflächen der Paneele abgerundet oder abgeschrägt ausgebildet sein, werden in die Trägerplatte sowohl in Längsrichtung als auch in Querrichtung weisende Nuten eingebracht.

Das erfindungsgemäße Verfahren erlaubt eine einfache Herstellung von Paneelen, da zunächst eine große Trägerplatte mit einer Schicht beschichtet wird und diese beschichtete Trägerplatte dann entlang der Nuten in Paneele zugeschnitten wird. Jedes Paneel weist bereits die gewünschten abgerundeten oder abgeschrägten Kantenbereiche an den gegenüberliegenden Querseitenflächen und/oder Längsseitenflächen auf. Darüber hinaus ist jedes Paneel vollständig mit einer durchgehenden Schicht beschichtet, die auch die abgerundeten oder abgeschrägten Kantenbereiche des jeweiligen Paneels umfasst.

Die Schicht kann beliebig ausgebildet sein. Es kann sich beispielsweise um ein melaminharzgetränktes Papier handeln. Eine Schicht, die aus einem melaminharzgetränkten Papier besteht, ist trocken. Unter Hitzeeinwirkung von etwa 150°C schmilzt das Melamin auf, so dass nach dem Abkühlen eine dauerhafte Verbindung zwischen der Schicht und der Trägerplatte besteht. Auch ABS-Folien oder andere Materialien sind als Schicht möglich.

Sofern es sich bei der Schicht beispielsweise um eine dekorative Schicht handelt, kann auf der dekorativen Schicht oberseitig auch noch zusätzlich eine, beispielsweise bereits werksseitig aufgebrachte, Verschleißschicht vorgesehen sein. Bei der Verschleißschicht handelt es sich beispielsweise um einen Klarlack, der die dekorative Schicht oberseitig abdeckt.

Eine dekorative Schicht kann die unterschiedlichsten Dekore aufweisen. Das Dekor kann beispielsweise unifarben oder mehrfarbig ausgebildet sein. Auch kann das Dekor aus beliebigen Mustern oder auch Fotos bestehen. Selbstverständlich kann eine dekorative Schicht auch eine Oberflächenstruktur aufweisen. Dies bietet sich beispielsweise bei einem Holzdekor an, da hierdurch das Holzdekor durch die Oberflächenstruktur besser nachgebildet werden kann.

Die Verschleißschicht kann bereits vor dem Aufbringen der Schicht auf die Trägerplatte auf die Schicht aufgebracht worden sein, so dass die aufgebrachte Schicht als ein Verbund bestehend aus einer Verschleißschicht und einer dekorativen Schicht ausgebildet ist. Selbstverständlich ist es auch beispielsweise möglich, dass die Verschleißschicht nach Aufbringen der Schicht, beispielsweise flüssig, auf das bereits beschichtete Paneel aufgebracht wird.

Das erfindungsgemäße Verfahren kann kontinuierlich erfolgen. Dann können als Werkzeug beispielsweise Walzen oder Kalander eingesetzt werden. Bei Einsatz einer Walze kann die Walze auf ihrem Mantel umlaufende Erhebungen beispielsweise zum Einbringen der Nuten und/oder zum Aufbringen der Schicht in die Nuten aufweisen. Bei einer solchen Ausgestaltung sind die in die Trägerplatte eingebrachten Nuten parallel zur Förderrichtung ausgerichtet. Alternativ oder zusätzlich kann die Walze auf ihrem Mantel zumindest eine parallel zur Drehachse verlaufende Erhebung beispielsweise zum Einbringen der Nuten und/oder zum Aufbringen der Schicht in die Nuten aufweisen. Mit einer solchen Erhebung können in die Trägerplatte Nuten eingebracht werden, die orthogonal zur Förderrichtung ausgerichtet sind. Selbstverständlich ist auch eine andere Ausrichtung einer Erhebung in Bezug auf die Förderrichtung der Trägerplatte während der Durchführung des erfindungsgemäßen Verfahrens möglich.

Selbstverständlich ist auch eine diskontinuierlich arbeitender Herstellungsprozess möglich. Die Trennung der Trägerplatte kann beispielsweise mittels Sägen erfolgen. Entsprechende hergestellte Paneele sind sowohl für den Einsatz im Außenbereich als auch im Innenbereich geeignet.

Auf der zweiten Oberfläche kann sofern erforderlich beispielsweise ein Gegenzug vorgesehen sein. Es bietet sich an, wenn ein solcher Gegenzug vor dem Beschichten der Trägerplatte und vor dem Trennen in mehrere Paneele auf die zweite Oberfläche aufgebracht wird.

Sofern ein fertig beschichtetes Paneel beispielsweise eine oberseitige Mittelfuge aufweisen soll, die sich beispielsweise parallel zu zwei gegenüberliegenden Seitenflächen erstreckt, wird in die Trägerplatte vor dem Beschichten oder zusammen mit dem Beschichten im Bereich zwischen zwei einzubringenden benachbarten Nuten ergänzend noch eine Mittelfuge eingebracht. Ein nach dem Beschichten der Trägerplatte später abgetrenntes Paneel ist damit vollständig mit einer durchgehenden Schicht beschichtet, die sowohl die abgerundeten oder abgeschrägten Kantenbereiche umfasst als auch die Mittelfuge des jeweiligen Paneels überdeckt.

Es ist auch möglich, dass die Herstellung, insbesondere die Herstellung durch Pressen, der Trägerplatte und auch das Versehen der herzustellenden Trägerplatte mit Nuten zusammen mit der Beschichtung mit der Schicht, also gleichzeitig, erfolgen, wobei die Nuten Seitenflanken und einen Nutgrund umfassen, und anschließend die Trägerplatte nach dem Beschichten in mehrere Paneele getrennt wird und die Einbringung der Nuten sowie die Trennung in Paneele derart aufeinander abgestimmt erfolgen, dass nach dem jeweiligen Durchtrennen entlang jeweils einer Nut die Seitenflanken der Nuten jeweils den abgerundeten oder abgeschrägten Kantenbereich des entsprechenden Paneels bilden. Zumindest die letzten Schritte der Herstellung der Trägerplatte erfolgen in diesem Fall zusammen mit der Beschichtung mit der Schicht. Sofern es sich bei der Trägerplatte beispielsweise um eine MDF-Platte handelt, ist es denkbar, dass das Aushärten der Fasermatte, aus der die als MDF-Platte ausgebildete Trägerplatte hergestellt wird, und das Versehen, d. h. das Einbringen, der Nuten, wobei die Nuten Seitenflanken und einen Nutgrund umfassen, zusammen mit dem Beschichten mit der Schicht erfolgt und anschließend in einem zweiten Verfahrensschritt die Trägerplatte nach dem Beschichten in mehrere Paneele getrennt wird und die Einbringung der Nuten sowie die Trennung in Paneele derart aufeinander abgestimmt erfolgen, dass nach dem jeweiligen Durchtrennen entlang jeweils einer Nut die Seitenflanken der Nuten jeweils den abgerundeten oder abgeschrägten Kantenbereich des entsprechenden Paneels bilden.

Dabei kann im Bereich zumindest einer Nut die Schicht mit den beiden Seitenflanken und dem Nutgrund dieser Nut verbunden sein.

Bei einem bevorzugten Ausführungsbeispiel des Verfahrens ist im Bereich zumindest einer Nut die Schicht nur zumindest bereichsweise, insbesondere vollständig, mit den beiden Seitenflanken dieser Nut verbunden. Damit ist die aufgebrachte Schicht zum einen mit der ersten Oberfläche eines jeden nach dem Trennen entstehenden Paneels und zum anderen zumindest bereichsweise, insbesondere vollständig, mit den abgerundeten oder abgeschrägten Kantenbereichen des entsprechenden Paneels verbunden. Allerdings besteht kein Verbund zwischen der Schicht und dem Nutgrund. Damit ist ein spannungsfreies Aufbringen der Schicht auf die einzelnen durch Trennen der Trägerplatte hergestellten Paneele möglich. Hierdurch ist auch ein Aufbringen von Schichten geringer Dehnung möglich, ohne dass beispielsweise ein Schüsseln, d. h. ein Wölben, eines einzelnen Paneels verhindert wird. Sofern Paneele mit einer Nut-/Federverbindung hergestellt werden sollen, ist der nicht beschichtete Nutgrund auch nicht nachteilig, da der Nutgrund üblicherweise die Oberseite der später eingebrachten Feder darstellt.

Dabei kann zwischen der Schicht und dem Nutgrund zumindest einer Nut ein Freiraum sein, so dass die Schicht im Bereich des Nutgrundes nicht in Kontakt mit der Trägerplatte ist.

Die Schicht kann durch einen Pressvorgang, insbesondere mittels eines weichen oder starren Presswerkzeuges, aufgebracht werden. Selbstverständlich sind auch andere Verfahren, wie beispielsweise Aufkleben mittels Leim, und auch dabei eingesetzte andere Werkzeuge möglich. Unter einem starren Presswerkzeug wird ein Werkzeug verstanden, bei dem zumindest die mit der Schicht beim Aufbringen in Kontakt befindliche Fläche aus einem starren Material wie z. B. Metall besteht. Bei einem weichen Presswerkzeug ist zumindest die mit der Schicht beim Aufbringen in Kontakt befindliche Fläche aus einem verformbaren Material wie z. B. Gummi. Durch die elastischen Eigenschaften passt sich das Werkzeug optimal der Ausgestaltung der Trägerplatte an. Handelt es sich bei der Schicht um ein melaminharzgetränktes Papier, entsteht beim Pressvorgang Hitze. Infolgedessen schmilzt das Melamin auf, so dass nach dem Abkühlen eine dauerhafte Verbindung zwischen der Schicht und der Trägerplatte besteht.

Dabei kann die Schicht durch einen Aufbringvorgang zunächst in Kontakt mit der ersten Oberfläche gebracht und durch einen anschließenden Pressvorgang, insbesondere mittels eines weichen oder starren Presswerkzeuges, aufgebracht werden. Beim in Kontaktbringen der Schicht mit der ersten Oberfläche wird die Schicht aufgelegt, so dass die Schicht beispielsweise gegebenenfalls noch gegenüber der Trägerplatte ausgerichtet werden kann. Dabei kann vor dem in Kontaktbringen der Schicht mit der ersten Oberfläche auf die erste Oberfläche der Trägerplatte beispielweise bereits eine Leim- oder Klebeschicht aufgebracht worden sein. Es ist auch denkbar, dass die Schicht rückseitig eine entsprechende Beschichtung aufweist, die eine spätere dauerhafte Verbindung zwischen Trägerplatte und Schicht ermöglicht. Es ist aber auch möglich, dass als Schicht ein melaminharzgetränktes Papier verwendet wird, das trocken ist. Durch das in Kontaktbringen der Schicht mit der ersten Oberfläche liegt das melaminharzgetränkte Papier auf der Trägerplatte auf. Nach dem in Kontaktbringen schließt sich dann der Pressvorgang an.

Zumindest eine Nut kann durch einen Pressvorgang, insbesondere mittels eines starren Presswerkzeuges, eingebracht werden. Jede Seitenflanke der Nut bildet den abgerundeten oder abgeschrägten Kantenbereich des entsprechend hergestellten Paneels. Unter einem starren Werkzeug wird ein Werkzeug verstanden, bei dem zumindest die mit der Schicht beim Aufbringen in Kontakt befindliche Fläche aus einem starren Material wie z. B. Metall besteht. Sofern zwischen der Schicht und dem Nutgrund ein Freiraum verbleiben soll, so dass damit die aufgebrachte Schicht in diesem Bereich nicht mit dem Nutgrund in Kontakt und mit diesem verbunden ist, ist das Pressblech so ausgebildet, dass bei Erreichen der Endposition des Pressvorgangs das Pressblech im Bereich der ersten Oberseite und im Bereich der Kantenbereiche auf die aufzupressende Schicht wirkt, so dass in diesen Bereichen ein Verbinden durch Pressen erfolgt. Hingegen ist das Pressblech in dem Bereich, der die Nut einpresst, so ausgebildet, dass in der Endposition des Pressvorgangs das Pressblech zu dem betreffenden Nutgrund beabstandet angeordnet ist. Damit besteht zwischen der Schicht und dem Nutgrund ein Freiraum, so dass die Schicht in diesem Bereich infolgedessen nicht mit dem Nutgrund in Kontakt kommt.

Zumindest eine Nut kann durch einen Fräsvorgang eingebracht werden. Dies bietet sich insbesondere bei einem kontinuierlich betriebenen Herstellverfahren an.

Sofern in einem Arbeitsschritt die Trägerplatte mit der Schicht beschichtet und gleichzeitig mit Nuten versehen wird, muss das hierfür eingesetzte Werkzeug zumindest im Bereich seiner Kontaktfläche, die die Nuten einbringt und gleichzeitig die Schicht aufbringt, eine hinreichende Festigkeit aufweisen, damit in das Trägermaterial die Nuten eingebracht werden können.

Sofern jedoch die Trägerplatte zunächst mit Nuten versehen und anschließend mit der Schicht beschichtet wird, kann die Schicht mit einem Werkzeug aufgebracht werden, bei dem die mit der Schicht beim Aufbringen in Kontakt befindlichen Fläche aus einem starren oder verformbaren Material besteht. Als verformbares Material bietet sich beispielsweise Gummi an. Aufgrund der elastischen Eigenschaften kann sich die mit der Schicht beim Aufbringen in Kontakt befindliche Fläche des Werkzeuges optimal den abgerundeten oder abgeschrägten Kantenbereichen sowie eventuell vorgesehenen Mittelfugen anpassen. Bei Beschichten eines genuteten Trägermaterials mit einem Werkzeug, dessen mit der Schicht beim Aufbringen in Kontakt befindliche Fläche aus einem starren Material, wie beispielsweise einem Metall, besteht, muss die Kontur der Fläche des Werkzeuges genau der Oberflächenausgestaltung des genuteten Trägermaterials angepasst sein, um ein flächiges Aufbringen der Schicht zu gewährleisten.

Vorteilhafterweise sind die Abmessungen der aufzubringenden Schicht nicht kleiner als die Abmessungen der Trägerplatte vor der Trennung in Paneele. Auf diese Weise ist eine vollflächige Beschichtung der Oberseite der Trägerplatte möglich, wobei die Schicht nicht nur die Oberseite der aus der Trägerplatte hergestellten Paneele, sondern auch die Seitenflanken jeder Nut und gegebenenfalls auch den kompletten Nutgrund jeder Nut umfasst. Eine Beschichtung des kompletten Nutgrundes aller Nuten ist insbesondere mit Schichten möglich, die als Folie ausgebildet sind und insoweit in einem gewissen Maß gedehnt werden können.

Sofern eine Schicht aufgebracht wird, die insbesondere keinerlei Dehnung erlaubt, kann die Schicht entlang zumindest einer Nut beim Aufbringen, insbesondere beim Pressen, aufreißen oder durchtrennt werden. Das Aufreißen kann beispielsweise automatisch erfolgen, wenn die beim Aufbringen im Bereich der Nut auf die Schicht wirkende Kraft einen Wert übersteigt. Da das Aufreißen im Bereich der Nut erfolgt und auch die spätere Trennung in Paneele entlang jeweils einer Nut erfolgt, ist jedes Paneel gleichwohl auf seiner kompletten Oberseite sowie auf seinen abgerundeten oder auf seinen abgeschrägten Kantenbereichen vollständig beschichtet.

Die Schicht kann, bevor sie aufgebracht wird, zumindest entlang einer späteren Nut durchtrennt werden. Bei dieser Herstellweise wird die an den späteren Nuten bereits durchtrennte Schicht in Kontakt mit der ersten Oberfläche gebracht und durch einen anschließenden Pressvorgang, insbesondere mittels eines weichen oder starren Presswerkzeuges, aufgebracht.

Sofern ein Kleber bzw. ein Leim aufgebracht wird, bietet es sich an, dass nach dem Trennen der Schicht zumindest entlang einer späteren Nut und vor dem in Kontaktbringen der durchtrennten Schicht mit der Trägerplatte auf die der ersten Oberfläche der Trägerplatte zugewandte Oberfläche der Schicht und/oder auf die erste Oberfläche der Trägerplatte eine Leim- oder Klebeschicht aufgebracht wird. Da der Kleber bzw. der Leim erst nach dem Trennen der Schicht aufgebracht wird, ist sichergestellt, dass die zum Trennen eingesetzte Trennvorrichtung nicht in Kontakt mit dem Leim bzw. mit dem Kleber kommt. Nach dem Aufbringen des Klebers bzw. des Leims wird die bereits zuvor durchtrennte Schicht in Kontakt mit der ersten Oberfläche gebracht und durch einen anschließenden Pressvorgang, insbesondere mittels eines weichen oder starren Presswerkzeuges, aufgebracht.

Dabei kann die Schicht zumindest entlang einer Nut, nachdem die Schicht in Kontakt mit der ersten Oberfläche gebracht wurde, und vor dem anschließenden Pressvorgang durchtrennt werden. Bei einer solchen Herstellweise wird die Schicht zunächst in Kontakt mit der ersten Oberfläche beispielsweise mit der bereits mit Nuten versehenen Trägerplatte gebracht. Dabei kann vor dem in Kontakt bringen der Schicht mit der ersten Oberfläche auf die erste Oberfläche der Trägerplatte beispielweise bereits eine Leim- oder Klebeschicht aufgebracht worden sein. Es ist auch denkbar, dass die Schicht rückseitig eine entsprechende Beschichtung aufweist, die eine spätere dauerhafte Verbindung zwischen Trägerplatte und Schicht ermöglicht. Es ist aber auch möglich, dass als Schicht ein melaminharzgetränktes Papier verwendet wird, das trocken ist. Durch das in Kontaktbringen der Schicht mit der ersten Oberfläche liegt das melaminharzgetränkte Papier auf der Trägerplatte auf. Nach dem in Kontaktbringen der Schicht mit der ersten Oberfläche wird die Schicht entlang zumindest einer Nut durchtrennt. Dann wird anschließend die Schicht auf die erste Oberfläche der Trägerplatte aufgepresst.

Insbesondere bei Schichten, die aus Papier bestehen oder Papier beinhalten, kann es sich aber auch anbieten, wenn die Schicht, insbesondere im aufgelegten Zustand, entlang zumindest einer späteren Nut, vorzugsweise entlang jeder Nut, eine Perforation aufweist. Die Perforation kann beispielsweise als Schlitz- oder Lochstanzung ausgebildet sein. Hierdurch ist die Schicht entlang jeder Perforation trennbar. Die Perforation ist vorzugsweise - bezogen auf die Breite der Nut gesehen - mittig angeordnet. Sofern die Schicht bereits perforiert ist, wird die Schicht vor dem Aufbringen auf die Trägerplatte so angeordnet, dass die Perforation parallel zu den Seitenflanken der Nut verläuft und vorzugsweise in der Mitte der Nut angeordnet ist. Beim Aufbringen der Schicht auf die Trägerplatte reißt die Schicht entlang der Perforation auf, so dass ein kontrolliertes Aufbringen der Schicht im Bereich der Nut möglich ist. Ferner erlaubt das Aufreißen der Schicht ein spannungsfreies Aufbringen der Schicht auf die Trägerplatte.

Alternativ ist es möglich, dass die Schicht entlang zumindest einer Nut beim Aufbringen, insbesondere beim Pressen, oder vor dem Aufbringen, insbesondere vor dem Pressen, oder nach dem Aufbringen, insbesondere nach dem Pressen, durch eine, insbesondere am Presswerkzeug vorgesehene, Einrichtung perforiert, insbesondere durchtrennt, wird.

Bei der Einrichtung kann es sich beispielsweise um einen sich über die Länge der Einrichtung erstreckenden, messerartig ausgebildeten und in Richtung der zu trennenden Schicht weisenden Vorsprung handeln. Der Vorsprung kann beispielsweise im Bereich der Pressfläche eines Presswerkzeuges vorgesehen sein. Beim Pressen wird die Schicht durch den jeweiligen Vorsprung durchtrennt und gleichzeitig die Schicht durch das Presswerkzeug aufgebracht. Es bietet sich an, wenn im Bereich jeder Nut ein hinsichtlich seiner Ausgestaltung dem zugehörigen Vorsprung angepasster Freiraum vorgesehen ist, in dem nach dem Trennvorgang der Vorsprung zur Reduzierung einer Abnutzung, insbesondere berührungsfrei, aufgenommen wird.

Alternativ kann die Einrichtung feine, im geringen Abstand zueinander angeordnete Stempel aufweisen. Bei in Kontakt kommen mit der Schicht wird auf diese Weise eine Perforation in die Schicht eingebracht. Entlang jeder Perforation ist die Schicht trennbar. Die Stempel können beispielsweise im Bereich der Pressfläche eines Presswerkzeuges angeordnet sein. Es bietet sich an, wenn im Bereich jeder Nut ein hinsichtlich seiner Ausgestaltung den zugehörigen Stempeln angepasster Freiraum vorgesehen ist, in dem nach der Perforation der Schicht die Stempel zur Reduzierung einer Abnutzung, insbesondere berührungsfrei, aufgenommen werden.

Sofern die Nut beispielsweise V-förmig ausgebildet ist, kann der Freiraum eine Verlängerung der Nut in dem Bereich darstellen, in dem die beiden Seitenflanken dieser Nut aufeinandertreffen.

Die aufzubringende Schicht kann mehrteilig, aus parallel angeordneten Streifen bestehen, wobei die Abmessungen jedes Streifens einem hergestellten Paneel entsprechen und wobei die Anordnung derart erfolgt, dass die Streifen mit den späteren Paneelen deckungsgleich angeordnet sind.

Dabei können zumindest zwei benachbart angeordnete Streifen unmittelbar aneinander angrenzend vorgesehen sein. Bei einer solchen Ausbildung der Streifen verbleibt - sofern die Streifen aus einem nicht hinreichend dehnbaren Material bestehen - nach dem Aufbringen in jeder Nut ein kleiner Bereich, der nicht von der Schicht beschichtet ist. Alternativ können zumindest zwei benachbart verlaufende Streifen, insbesondere geringfügig, überlappend angeordnet sein. Eine solche Ausgestaltung erlaubt ein Beschichten der Trägerplatte mit der Schicht auch in den beiden Seitenflanken und dem Nutgrund jeder Nut, sofern eine hinreichend große Überlappung vorgesehen ist.

Die Schicht kann als dekorative Schicht ausgebildet sein.

Selbstverständlich ist es auch möglich, dass die Schicht aus mehreren übereinander angeordneten Lagen besteht. So kann eine Lage beispielsweise eine dekorative Schicht und eine darüber liegende Lage eine Verschleißschicht darstellen. Sofern die Schicht aus mehreren Lagen besteht, können die Lagen zunächst gegeneinander aufgebracht sein und dann die Schicht in ihrer Gesamtheit auf die Trägerplatte aufgebracht werden. Selbstverständlich ist es aber auch möglich, dass zunächst eine erste Lage auf die Trägerplatte und später dann die weiteren Lagen aufgebracht werden.

Nach der Trennung der beschichteten Trägerplatte in Paneele können an zumindest einem Paar gegenüberliegender Längsseitenflächen eines Paneels und/oder Querseitenflächen eines Paneels entsprechende Ausgestaltungen für eine Nut-/Federverbindung vorgesehen werden.

Zumindest eine Nut kann mit einer nutenförmigen Ausnehmung versehen werden. In dem Bereich der nutenförmigen Ausnehmung weist die Trägerplatte eine deutlich geringere Dicke auf. Die Dicke der Trägerplatte im Bereich der nutenförmigen Ausnehmung ist so gewählt, dass einerseits die Trägerplatte nicht vor dem Trennen in einzelne Paneele unbeabsichtigt zerbrechen kann, jedoch andererseits zwei benachbarte Paneele sich entlang ihrer Nut etwas gegeneinander nach oben anwinkeln können. Die nutenförmige Ausnehmung insbesondere in Verbindung mit dem Freiraum im Bereich einer Nut ermöglicht die Herstellung einer spannungsfreien Gesamtkonstruktion aus einer mit einer Schicht beschichteten Trägerplatte. Hierdurch wird beispielsweise ein Schüsseln, d. h. ein Wölben, eines einzelnen Paneels verhindert.

Um ein Schüsseln der Paneele quer zur Längsrichtung zu verhindern, bietet es sich an, wenn auf die zweite Oberfläche der Trägerplatte, d.h. auf die Unterseite der Trägerplatte, vorzugsweise vor dem Trennen der Trägerplatte in Paneele, eine als Rückzug dienende Schicht aufgebracht wird.

Im Folgenden werden in den Zeichnungen dargestellte Ausführungsbeispiele der Erfindung erläutert. Es zeigen:
- Fig. 1: zwei unterschiedliche Herstellverfahren,
- Fig. 2-5: vier Schnitte durch einen Teilbereich einer Trägerplatte vor dem Zertrennen in einzelne Paneele,
- Fig. 6-8: drei verschiedene Ausführungsformen einer Schicht,
- Fig. 9: einen Schnitt durch einen Teilbereich einer alternativ ausgebildeten Trägerplatte mit einem oberhalb der Trägerplatte befindlichen Pressblech,
- Fig. 10: einen Schnitt durch einen Teilbereich einer alternativ ausgebildeten Trägerplatte, wobei in der Nut zusätzlich noch eine nutenförmige Ausnehmung vorgesehen ist, und
- Fig. 11: den Gegenstand nach Fig. 10, wobei die für eine Rastverbindung zu entfernenden Bereiche kariert dargestellt sind.

In allen Figuren werden für gleiche bzw. gleichartige Bauteile übereinstimmende Bezugszeichen verwendet.

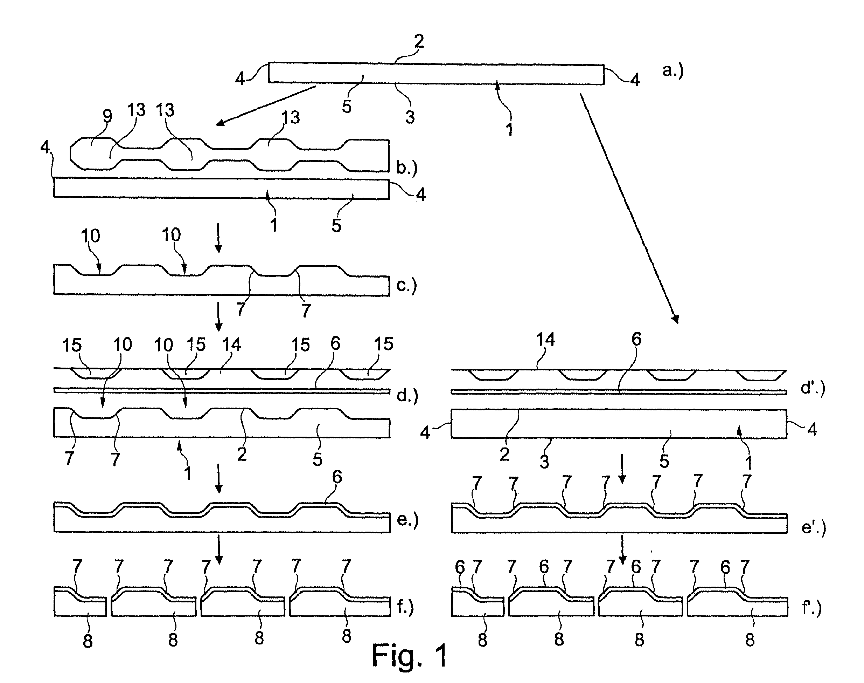

In den Figuren 1a bis 1f ist ein erstes Herstellverfahren dargestellt. Figur 1a zeigt eine noch unbeschichtete Trägerplatte 1. Die Trägerplatte 1 hat eine erste Oberfläche 2, eine zweite gegenüberliegende Oberfläche 3 sowie zwei gegenüberliegende Längsseitenflächen 4 und zwei gegenüberliegende Querseitenflächen 5. Auf die erste Oberfläche 2 soll später eine Schicht 6 aufgebracht werden.

Wie beispielsweise in Fig. 1f dargestellt, sind die Kantenbereiche 7 des herzustellenden Paneels 8 an den zwei gegenüberliegenden Längsseitenflächen 4 abgeschrägt ausgebildet. Die aufzubringende Schicht 6 umfasst dabei auch die abgeschrägten Kantenbereiche 7.

Zunächst werden mittels eines Werkzeuges 9, beispielsweise eines Press- oder eines Fräswerkzeuges, in die erste Oberfläche 2 der Trägerplatte 1 - so wie es in den Schritten 1b und 1c dargestellt ist - Nuten 10 eingebracht. Jede Nut 10 weist einen Nutgrund 11 sowie zwei Seitenflanken 12 auf. Die Nuten 10 verlaufen parallel.

Zum Einbringen der Nuten 10 weist das Werkzeug 9 eine entsprechende Anzahl an Erhebungen 13 auf. Die Form und die Anordnung der Erhebungen 13 ist auf die jeweils einzubringende Nut 10 abgestimmt.

In den Schritten 1d und 1e wird die mit den Nuten 10 versehene Trägerplatte 1 dann mit einer Schicht 6 beschichtet. In dem dargestellten Ausführungsbeispiel erfolgt das Beschichten durch einen Pressvorgang. Hierfür ist ein Pressblech 14 vorgesehen. Das Pressblech 14 hat auf seiner der ersten Oberfläche 2 und der Schicht 6 zugewandten Seite Erhebungen 15. Die Ausrichtung, der Abstand und die Form der Erhebungen 15 ist auf die in der Trägerplatte 1 vorgesehenen Nuten 10 abgestimmt. Beim Pressen verlagert sich jede Erhebung 15 in die korrespondierende Nut 10.

Durch Absenken des Pressbleches 15 wird die Schicht 6 aufgepresst. In Fig. 1e ist die beschichtete Trägerplatte 1 nach dem Pressen im Schnitt dargestellt. Bei diesem Ausführungsbeispiel ist die aufgebrachte Schicht 6 sowohl mit den beiden Seitenflanken 12 als auch mit dem Nutgrund 11 einer jeden Nut 10 in Kontakt, so dass in diesem Fall die Schicht 6 hinreichende Dehnungseigenschaften aufweisen muss. Es kann sich bei der Schicht 6 beispielsweise um eine ABS-Folie handeln.

Nach dem Beschichten wird in Schritt 1f die beschichtete Trägerplatte 1 gemäß Fig. 1e in vier Paneele 8, beispielsweise durch Sägen, zertrennt.

Die Figuren 1a sowie 1d' bis 1f' zeigen ein alternatives Herstellverfahren. Hier werden direkt mittels eines geeigneten Werkzeuges, wie zum Beispiel mittels eines Pressbleches 14, an dem unterseitig Erhebungen 15 vorgesehen sind, sowohl die Nuten 10 in die Trägerplatte 1, als auch die Schicht 6 auf die Trägerplatte 1 aufgebracht. Das Ergebnis des Einbringens der Nuten 10 in die Trägerplatte 1 als auch des gleichzeitigen Aufbringens der Schicht 6 ist in Fig. 1e' dargestellt.

Es schließt sich dann wieder das Trennen der Trägerplatte 1 entlang der Nuten 10 an, so dass aus der Trägerplatte 1 insgesamt vier beschichtete Paneele 8 hergestellt worden sind, deren Kantenbereiche 7 an den zwei gegenüberliegenden Längsseitenflächen 4 abgeschrägt ausgebildet sind. Die Kantenbereiche 7 sind von der aufgebrachten Schicht 6 umfasst.

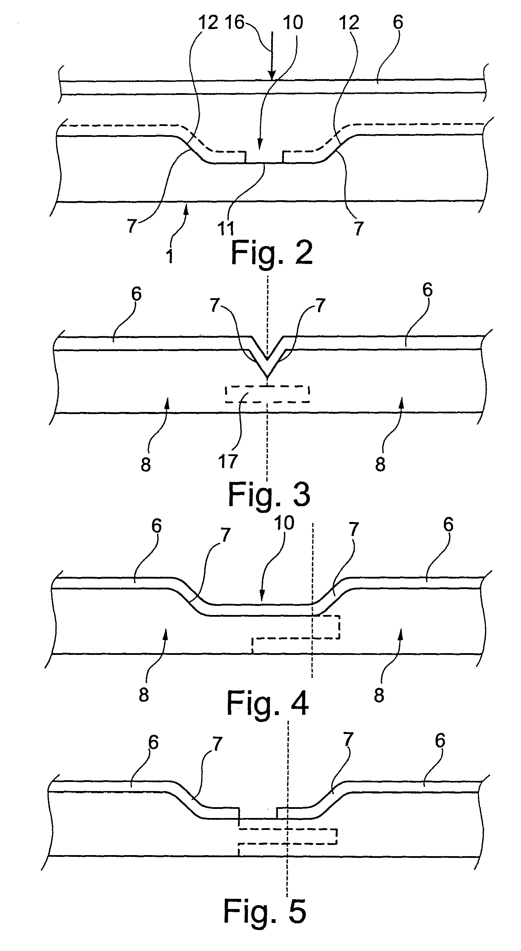

Nach dem Trennen, so wie es in den Schritten 1f bzw. 1f' dargestellt ist, können die Längs- und/oder Querseitenflächen 4, 5 eines jeden Paneels 8 bearbeitet werden. So kann beispielsweise das Anbringen einer Ausgestaltung für eine Nut-/Federverbindung erfolgen, was in den Fig. 3 bis 5 angedeutet ist.

In Fig. 2 ist die noch nicht aufgebrachte Schicht 6 in durchgezogenen Linien dargestellt. In dem dargestellten Ausführungsbeispiel handelt es sich bei der Schicht 6 beispielsweise um ein Papier, das nicht hinreichend dehnbar ist. Dies hat zur Folge, dass im aufgebrachten Zustand zwar die beiden Seitenflanken 12 jedoch nicht der Nutgrund 11 vollständig beschichtet ist. Das spätere Trennen kann beispielsweise entlang des unbeschichteten Bereichs erfolgen.

Um die Anordnung und Ausrichtung des unbeschichteten Bereichs gegenüber dem Nutgrund 11 kontrolliert zu beeinflussen, kann die Schicht 6 beispielsweise an der mit einem Pfeil 16 gezeigten Stellung eine Perforation aufweisen. Während des Aufbringvorgangs, beispielsweise durch Pressen, reißt die Schicht 6 kontrolliert entlang der Perforation ein, so dass die Schicht 6 nach dem vollständigen Aufbringen die gestrichelt dargestellte Lage einnimmt.

Die Perforationen können bereits werksseitig in die Schicht 6 eingebracht worden sein. Selbstverständlich ist es auch möglich, dass die Perforationen beispielsweise beim Aufbringen, wie beim Pressen, der Schicht 6 eingebracht werden. Hierzu kann das eingesetzte Werkzeug, beispielsweise ein Pressblech 14, an jeder Erhebung 15 eine Einrichtung aufweisen, die feine, im geringen Abstand zueinander angeordnete Stempel umfasst. Bei in Kontakt kommen mit der Schicht 6 wird auf diese Weise eine Perforation in die Schicht 6 eingebracht.

Alternativ oder in Ergänzung kann das zum Aufbringen eingesetzte Werkzeug, beispielsweise das Pressblech 14, an jeder Erhebung 15 eine Einrichtung aufweisen, die die Schicht 6 beim Aufbringen im Bereich jeder Nut 10 durchtrennt. Bei der Einrichtung kann es sich beispielsweise um einen sich über die Länge der Einrichtung erstreckenden, messerartig ausgebildeten und in Richtung der zu trennenden Schicht 6 weisenden Vorsprung handeln.

In den Fig. 3 bis 5 sind unterschiedliche Ausgestaltungen von Nuten 10 dargestellt. Fig. 3 zeigt eine Nut 10, die V-förmig ausgebildet ist. Entlang der senkrechten gestrichelten Linie kann die Trägerplatte 1 mit der aufgebrachten Schicht 6 durchtrennt und auf diese Weise die einzelnen beschichteten Paneele 8 erzeugt werden. Bei dem Ausführungsbeispiel nach Fig. 3 bietet sich beispielsweise an, in die jeweilige Längsseitenfläche 4 beider Paneele 8 eine Nut einzubringen, in die dann jeweils ein Ende einer losen Feder 17 eingeführt wird. Entsprechendes ist in punktierten Linien dargestellt.

In Fig. 4 ist eine Trägerplatte 1 dargestellt, auf die eine Schicht 6 mit einer hinreichenden Elastizität und/oder einer hinreichenden Dehnbarkeit aufgebracht worden ist. Bei der Schicht 6 kann es sich in diesem Beispiel beispielsweise um eine Folie oder um ein speziell behandeltes Papier oder um ein getränktes Papier handeln. Ein getränktes Papier ist - wie auch eine mit Tapetenkleister versehene Tapete - im noch nicht getrockneten Zustand in einem gewissen Maße dehnbar. Die Schicht 6 umfasst daher beide Seitenflanken 12 und den Nutgrund 11 jeder Nut 10. Nach Trennen der Trägerplatte 1 entlang der senkrecht gestrichelt dargestellten Linie wird in die Längsseitenfläche 4 des rechten Paneels 8 eine Nut eingebracht, während die Längsseitenfläche 4 des linken Paneels 8 zu einer Feder gefräst wird.

In Fig. 5 ist eine Schicht 6 aufgebracht, die aufgrund ihrer Eigenschaften keine hinreichende Dehnung erlaubt. Daher ist jede Nut 10 in ihrer jeweiligen Mitte nicht beschichtet. In die Längsseitenfläche 4 des rechten Paneels 8 kann eine Nut eingefräst werden, während die Längsseitenfläche 4 des linken Paneels 8 so bearbeitet wird, dass sich die punktiert dargestellte Feder ergibt.

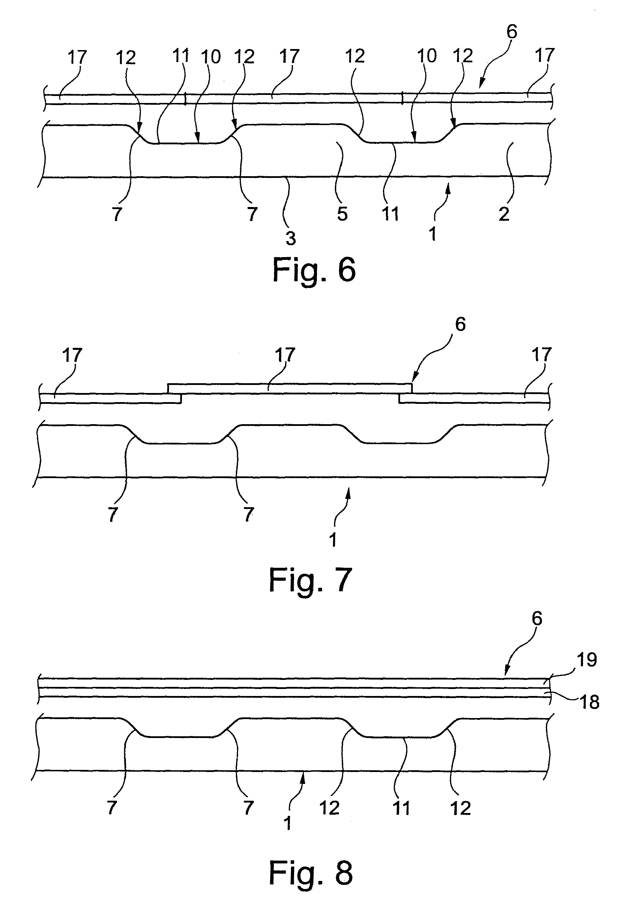

In den Fig. 6 und 7 ist die aufzubringende Schicht 6 mehrteilig aus parallel angeordneten Streifen 17 ausgebildet. Die Abmessungen jedes Streifens 17 entsprechen einem herzustellenden Paneels 8, wobei die Anordnung so ist, dass die Streifen 17 mit den späteren Paneelen 8 deckungsgleich angeordnet sind.

In Fig. 6 grenzen zwei benachbart angeordnete Streifen 17 unmittelbar aneinander. Demgegenüber ist in Fig. 7 eine Ausführungsform dargestellt, bei der zwei benachbart verlaufende Streifen 17 geringfügig überlappend angeordnet sind. Bei der Anordnung der Streifen 17 nach Fig. 7 können auch mit Streifen 17, die keine Dehnung erlauben, die beiden Seitenflanken 12 und der Nutgrund 11 jeder Nut 10 beschichtet werden, sofern das Maß der Überlappung zweier benachbarter Streifen 17 zumindest zweimal dem Abstand zwischen der von dem Nutgrund 11 und der Seitenflanke 12 gebildeten Kante einerseits und der von der Seitenflanke 12 und der ersten Oberfläche 1 gebildeten Kante andererseits entspricht.

In Fig. 8 ist eine Schicht 6 dargestellt, die aus mehreren übereinander angeordneten Lagen 18, 19 besteht. Bei der der Trägerplatte 1 zugewandten Lage 18 kann es sich beispielsweise um eine Dekorlage und bei der darüber angeordneten Lage 19 um eine Verschleißlage handeln.

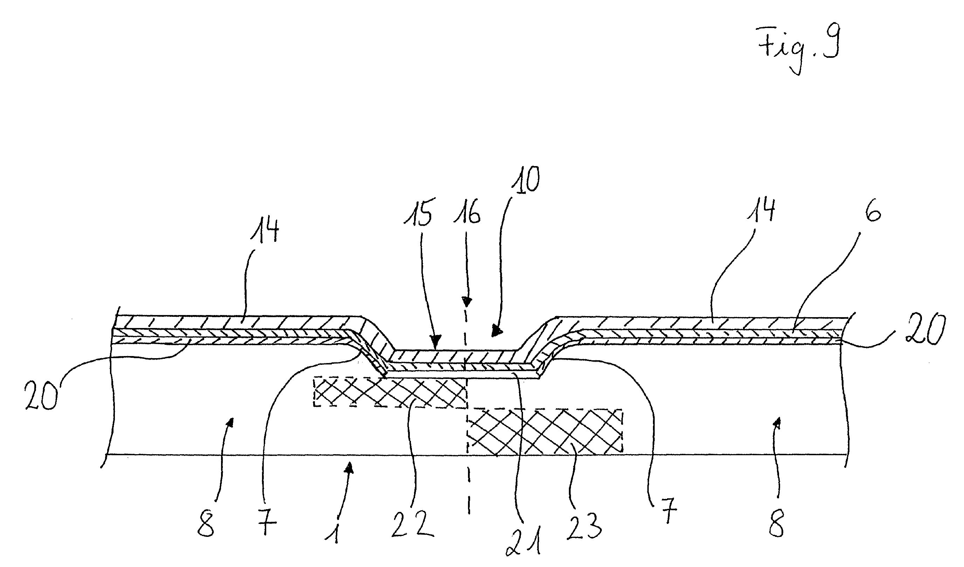

Während in den Figuren 1 bis 8 Ausführungsbeispiele dargestellt sind, bei denen die Schicht 6 auch im Bereich des Nutgrundes 11 in Kontakt mit der Trägerplatte 1 ist, zeigen die Figuren 9 bis 11 Ausführungsbeispiele, bei denen die aufgebrachte Schicht 6 nur im Bereich der ersten Oberfläche 2 und im Bereich der Kantenbereiche 7 und nicht mit dem Nutgrund 11 einer jeden Nut 10 in Kontakt ist. Hierzu ist in den Figuren 9 bis 11 auch eine Klebeschicht 20 angedeutet, die die aufgebrachte Schicht 6 mit der ersten Oberfläche 2 und den Kantenbereichen 7 verbindet.

Wie Fig. 9 zeigt, ist jede Erhebung 15 des Pressbleches 14 in Bezug auf ihre korrespondierende Nut 10 so ausgebildet, dass bei Erreichen der Endposition des Pressvorgangs, sowie er in Fig. 9 dargestellt ist, das Pressblech 14 im Bereich der ersten Oberseite 2 und im Bereich der Kantenbereiche 7 auf die aufzupressende Schicht 6 wirkt, so dass in diesen Bereichen ein Verbinden durch Pressen erfolgt. Hingegen ist in der Endposition des Pressbleches 14 jede Erhebung 15 zu ihrem jeweiligen Nutgrund 11 im Abstand angeordnet. Damit besteht zwischen der Schicht 6 und dem Nutgrund 11 ein Freiraum 21, so dass die Schicht 6 in diesem Bereich infolgedessen nicht mit dem Nutgrund 11 in Kontakt kommt.

Es bietet sich an, wenn die Schicht 6 im Bereich der Nut 10 eine Perforation aufweist, so dass beim Aufpressen die Schicht 6 an der mit einem Pfeil 16 gezeigten Stellung kontrolliert entlang der Perforation aufreißt. Dies ist in den Figuren 9 bis 11 nicht dargestellt.

Bei der Klebeschicht 20 kann es sich um einen entsprechend aufgebrachten Kleber handeln. Dieser wird lediglich in den Bereichen aufgebracht, in denen ein Verbinden zwischen der Schicht 6 und der Trägerplatte 1 erwünscht ist. Sofern es sich bei der Schicht 6 um ein Melamin getränktes Papier handelt, ist kein separater Kleber erforderlich. Bei der Klebeschicht 20 kann es sich in diesem Fall um das Melamin handeln, das beim Aufpressen aufschmilzt und im aufgeschmolzenen Zustand in den Bereichen, in denen die Schicht 6 mit der Trägerplatte 1 in Kontakt ist, ein Verkleben bewirkt. Da aufgrund der Ausgestaltung jeder Erhebung 15 in Bezug auf die dazugehörigen Nuten 10 ein Freiraum 21 besteht, wird in diesen Bereichen kein Kontakt zur Trägerplatte 1 hergestellt.

Nach dem Aufpressen der Schicht 6 kann das Trennen der Trägerplatte 1 entlang der Nuten 10 erfolgen. Dies ist durch die senkrechte, gestrichelt dargestellte Linie in Fig. 9 veranschaulicht. In die Längsseitenfläche 4 des linken Paneels 8 kann durch Entfernen des kariert dargestellten Bereichs 22 eine Nut eingebracht werden, während bei der Längsseitenfläche 4 des rechten Paneels 8 der kariert dargestellte Bereich 23 entfernt wird, sofern eine Feder gewünscht ist.

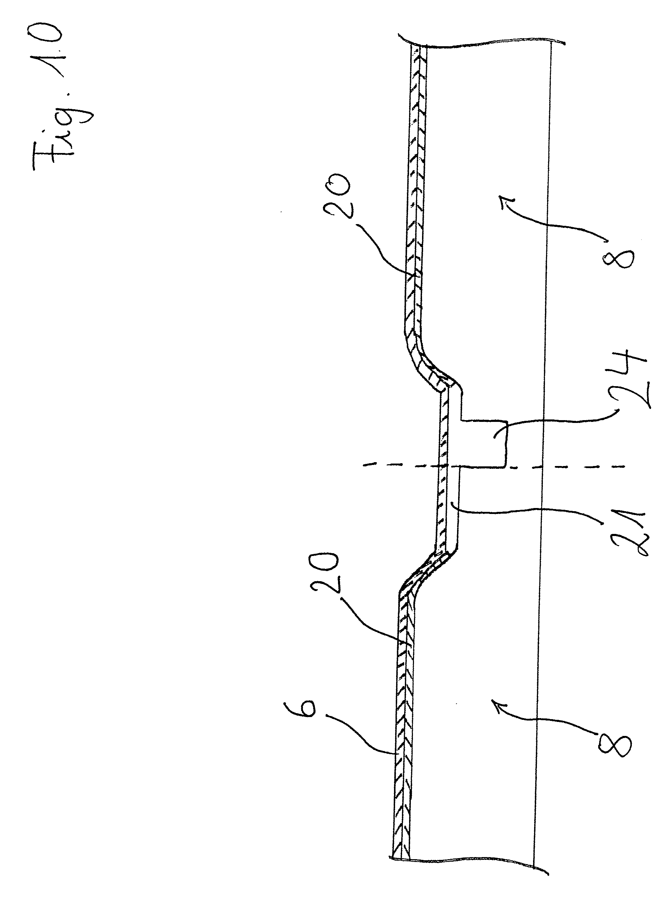

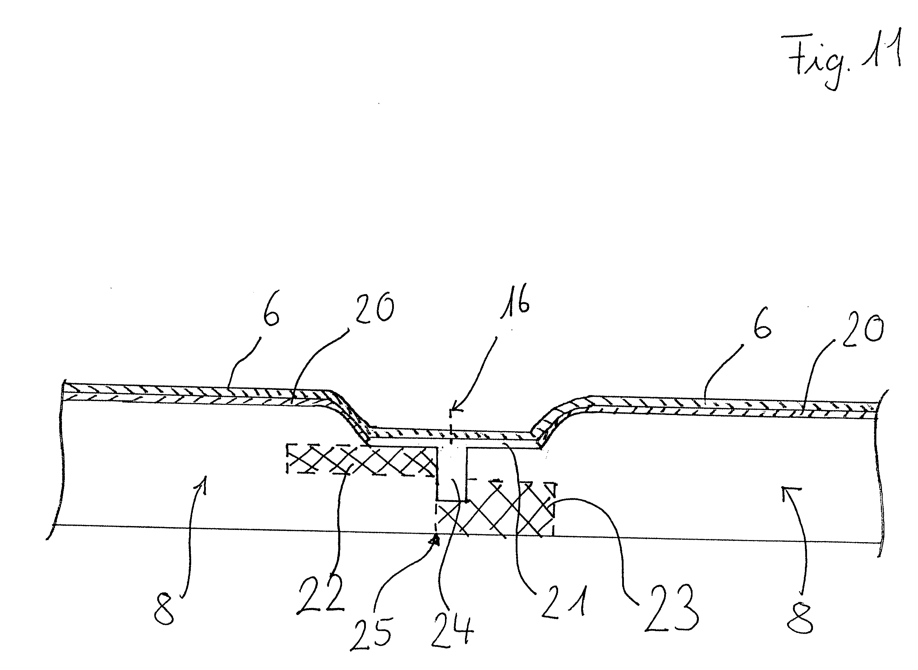

Die Figuren 10 und 11 zeigen Schnitte durch einen Teilbereich einer Trägerplatte 1, bei der wie in Fig. 9 ein Freiraum 21 aufgrund der vorbeschriebenen Ausgestaltung zwischen einer Erhebung 15 des Pressbleches 14 einerseits und der entsprechenden Nut 10 andererseits vorgesehen ist. Zusätzlich weist die Nut 10 im Bereich ihres Nutgrundes 11 noch eine nutenförmige Ausnehmung 24 auf, die sich vorzugsweise über die komplette Länge der Nut 10 erstreckt. In dem Bereich der nutenförmigen Ausnehmung 24 weist die Trägerplatte 1 eine deutlich geringere Dicke auf. Die Dicke der Trägerplatte 1 im Bereich der nutenförmigen Ausnehmung 24 ist so gewählt, dass einerseits die Trägerplatte 1 nicht vor dem Trennen in einzelne Paneele 8 unbeabsichtigt zerbrechen kann, jedoch andererseits zwei benachbarte Paneele 8 sich entlang ihrer Nut 10 etwas gegeneinander nach oben anwinkeln können.

Die nutenförmige Ausnehmung 24 insbesondere in Verbindung mit dem Freiraum 21 im Bereich einer Nut 10 ermöglicht die Herstellung einer spannungsfreien Gesamtkonstruktion aus einer mit einer Schicht 6 beschichteten Trägerplatte 1. Hierdurch wird beispielsweise ein Schüsseln, d. h. ein Wölben, eines einzelnen Paneels 8 verhindert.

In Fig. 11 ist gegenüber Fig. 10 die Stelle mit einem Pfeil 16 illustriert, in der die Schicht 6 eine Perforation aufweisen kann. Die Perforation ist in Fig. 11 nicht dargestellt und wird vorzugsweise insbesondere vor dem Aufbringen der Schicht 6 auf die Trägerplatte 1 in die Schicht 6 eingebracht. Nach dem Aufpressen der Schicht 6 schließt sich das Trennen der Trägerplatte 1 entlang jeder Nut 10 an. Das Trennen könnte vorliegend entlang der parallel zur Nut 10 verlaufenden Linie 25 erfolgen. Sofern eine Nut-/Federverbindung erwünscht ist, wird in die Längsseitenfläche 4 des linken Paneels 8 durch Entfernen des kariert dargestellten Bereichs 22 eine Nut eingebracht, während bei der Längsseitenfläche 4 des rechten Paneels 8 der kariert dargestellte Bereich 23 entfernt wird, so dass sich eine Feder bildet.

Die Abmessungen der Trägerplatte 1 und die Abmessungen der daraus herzustellenden Paneele 8 können beliebig ausgestaltet sein. So kann die Trägerplatte 1 beispielweise eine Länge von 5 m und eine Breite von 2 m aufweisen. Hieraus können Paneele 8 beispielsweise mit Abmessungen von 1,3 m x 0,2 m hergestellt werden.

## Patentansprüche

1. Verfahren zur Herstellung eines Paneels (8), insbesondere Fußboden-, Decken- oder Wandpaneels, mit einer Trägerplatte (1) einerseits, die eine erste Oberfläche (2) und eine zweite Oberfläche (3) sowie zwei gegenüberliegende Längsseitenflächen (4) und zwei gegenüberliegende Querseitenflächen (5) aufweist, und mit einer auf der ersten Oberfläche (2) aufgebrachten Schicht (6) andererseits, wobei die Kantenbereiche (7) des herzustellenden Paneels (8) an den zwei gegenüberliegenden Längsseitenflächen (4) und/oder an den zwei gegenüberliegenden Querseitenflächen (5) abgerundet oder abgeschrägt ausgebildet sind und die aufzubringende Schicht (6) auch auf den abgerundeten und die abgeschrägten Kantenbereiche (7) aufgebracht wird, **dadurch gekennzeichnet, dass**
in einem ersten Verfahrensschritt
- entweder die Trägerplatte (1) mit der Schicht (6) beschichtet und mit Nuten (10) versehen wird, wobei die Nuten (10) Seitenflanken (12) und einen Nutgrund (11) umfassen,
- oder die Trägerplatte (1) mit Nuten (10) versehen und anschließend mit der Schicht (6) beschichtet wird, wobei die Nuten (10) Seitenflanken (12) und einen Nutgrund (11) umfassen,
- oder aber die Herstellung der Trägerplatte (1) und auch das Versehen der herzustellenden Trägerplatte (1) mit Nuten (10) zusammen mit der Beschichtung mit der Schicht (6) erfolgt, wobei die Nuten (10) Seitenflanken (12) und einen Nutgrund (11) umfassen,
und dass in einem zweiten Verfahrensschritt
die Trägerplatte (1) nach dem Beschichten in mehrere Paneele (8) getrennt wird und die Einbringung der Nuten (10) sowie die Trennung in Paneele (8) derart aufeinander abgestimmt erfolgen, dass nach dem jeweiligen Durchtrennen entlang jeweils einer Nut (10) die Seitenflanken (12) der Nuten (10) jeweils den abgerundeten oder abgeschrägten Kantenbereich (7) des entsprechenden Paneels (7) bilden.

2. Verfahren nach dem vorhergehenden Anspruch, **dadurch gekennzeichnet, dass** im Bereich zumindest einer Nut (10) die Schicht (6) mit den beiden Seitenflanken (12) und dem Nutgrund (11) dieser Nut (10) verbunden ist.

3. Verfahren nach einem der vorhergehenden Ansprüche, **dadurch gekennzeichnet, dass** im Bereich zumindest einer Nut (10) die Schicht (6) nur zumindest bereichsweise, insbesondere vollständig, mit den beiden Seitenflanken (12) dieser Nut (10) verbunden ist.

4. Verfahren nach dem vorhergehenden Anspruch, **dadurch gekennzeichnet, dass** zwischen der Schicht (6) und dem Nutgrund (11) zumindest einer Nut (10) ein Freiraum (21) ist.

5. Verfahren nach einem der vorhergehenden Ansprüche, **dadurch gekennzeichnet, dass** die Schicht (6) durch einen Pressvorgang, insbesondere mittels eines weichen oder starren Presswerkzeuges, aufgebracht wird.

6. Verfahren nach einem der vorhergehenden Ansprüche, **dadurch gekennzeichnet, dass** die Schicht (6) durch einen Aufbringvorgang zunächst in Kontakt mit der ersten Oberfläche (2) gebracht und durch einen anschließenden Pressvorgang, insbesondere mittels eines weichen oder starren Presswerkzeuges, aufgebracht wird.

7. Verfahren nach einem der vorhergehenden Ansprüche, **dadurch gekennzeichnet, dass** zumindest eine Nut (10) durch einen Pressvorgang, insbesondere mittels eines starren Presswerkzeuges (14), eingebracht wird.

8. Verfahren nach einem der vorhergehenden Ansprüche, **dadurch gekennzeichnet, dass** zumindest eine Nut (10) durch einen Fräsvorgang eingebracht wird.

9. Verfahren nach einem der vorhergehenden Ansprüche, **dadurch gekennzeichnet, dass** die Abmessungen der aufzubringenden Schicht (6) nicht kleiner sind als die Abmessungen der Trägerplatte (1) vor der Trennung in Paneele (8).

10. Verfahren nach einem der vorhergehenden Ansprüche, **dadurch gekennzeichnet, dass** die Schicht (6) entlang zumindest einer Nut (10) beim Aufbringen, insbesondere beim Pressen, aufreißt oder durchtrennt wird.

11. Verfahren nach einem der vorhergehenden Ansprüche, **dadurch gekennzeichnet, dass** die Schicht (6), bevor sie aufgebracht wird, zumindest entlang einer späteren Nut (10) durchtrennt wird.

12. Verfahren nach Anspruch 6 oder nach einem der Ansprüche 7 bis 11, soweit die Ansprüche 7 bis 11 auf Anspruch 6 rückbezogen sind, **dadurch gekennzeichnet, dass** die Schicht (6) zumindest entlang einer Nut (10), nachdem die Schicht (6) in Kontakt mit der ersten Oberfläche (2) gebracht wurde, und vor dem anschließenden Pressvorgang durchtrennt wird.

13. Verfahren nach einem der vorhergehenden Ansprüche, **dadurch gekennzeichnet, dass** die Schicht (6) entlang zumindest einer Nut (10), vorzugsweise entlang jeder Nut (10), eine Perforation aufweist.

14. Verfahren nach einem der vorhergehenden Ansprüche, **dadurch gekennzeichnet, dass** die Schicht (6) entlang zumindest einer Nut (10) beim Aufbringen, insbesondere beim Pressen, oder vor dem Aufbringen, insbesondere vor dem Pressen, oder nach dem Aufbringen, insbesondere nach dem Pressen, durch eine, insbesondere am Presswerkzeug vorgesehene, Einrichtung perforiert, insbesondere durchtrennt, wird.

15. Verfahren nach einem der vorhergehenden Ansprüche, **dadurch gekennzeichnet, dass** die aufzubringende Schicht (6) mehrteilig, aus parallel angeordneten Streifen (17) besteht, wobei die Abmessungen jedes Streifen (17) einem hergestellten Paneel (8) entsprechen und wobei die Anordnung derart erfolgt, dass die Streifen (17) mit den späteren Paneelen (8) deckungsgleich angeordnet sind.

16. Verfahren nach einem der vorhergehenden Ansprüche, **dadurch gekennzeichnet, dass** zumindest zwei benachbart angeordnete Streifen (17) unmittelbar aneinander angrenzend vorgesehen sind.

17. Verfahren nach einem der vorhergehenden Ansprüche, **dadurch gekennzeichnet, dass** zumindest zwei benachbart verlaufende Streifen (17) überlappend angeordnet sind.

18. Verfahren nach einem der vorhergehenden Ansprüche, **dadurch gekennzeichnet, dass** die Schicht (6) als dekorative Schicht ausgebildet ist.

19. Verfahren nach einem der vorhergehenden Ansprüche, **dadurch gekennzeichnet, dass** die Schicht (6) aus mehreren übereinander angeordneten Lagen (18, 19) besteht.

20. Verfahren nach einem der vorhergehenden Ansprüche, **dadurch gekennzeichnet, dass** nach der Trennung in Paneele (8) an zumindest einem Paar gegenüberliegender Längsseitenflächen (4) eines Paneels (8) und/oder Querseitenflächen (5) eines Paneels (8) entsprechende Ausgestaltungen für eine Nut-/Federverbindung vorgesehen werden.

21. Verfahren nach einem der vorhergehenden Ansprüche, **dadurch gekennzeichnet, dass** zumindest eine Nut (10) mit einer nutenförmigen Ausnehmung (24) versehen wird.

22. Verfahren nach einem der vorhergehenden Ansprüche, **dadurch gekennzeichnet, dass** auf die zweite Oberfläche (3) der Trägerplatte (1), vorzugsweise vor dem Trennen der Trägerplatte (1) in Paneele (8), eine als Rückzug dienende Schicht aufgebracht wird.
